# EUROPEAN PATENT APPLICATION

(11) **EP 4 556 509 A1**
(43) Date of publication of application: **21.05.2025**
(21) Application number: 23839443.1
(22) Date of filing: 26.06.2023
(51) Int. Cl.: C08G 83/00, C08G 61/10, C08J 5/22, H01B 1/06, H01M 4/86, H01M 8/102, H01M 8/1023, H01M 8/1027, H01M 8/103, H01M 8/1032, H01M 8/1034, H01M 8/1037, H01M 8/1039

(54) **CATION EXCHANGE RESIN, CATION EXCHANGE MEMBRANE, ELECTROLYTE MEMBRANE, BINDER FOR FORMING ELECTRODE CATALYST LAYER, AND BATTERY ELECTRODE CATALYST LAYER**

(30) Priority: 15.07.2022 JP 2022113989
(71) Applicant: University of Yamanashi, Kofu-shi, Yamanashi 400-8510 (JP)
(72) Inventor: MIYATAKE Kenji, Kofu-shi, Yamanashi 400-8510 (JP)
(74) Representative: Plougmann Vingtoft a/s
(86) International application number: PCT/JP2023/023602
(87) International publication number: WO 2024/014269

(57) **Abstract**

Provided are a cation exchange resin being capable of producing a cation exchange membrane, an electrolyte membrane, a binder for forming an electrode catalyst layer, and a battery electrode catalyst layer, which has excellent electrical properties (cation conductivity) and chemical properties (gas permeability and water uptake property); a cation exchange membrane, an electrolyte membrane, and a binder for forming an electrode catalyst layer, which is formed from the cation exchange resin; and a battery electrode catalyst layer which is formed from the binder for forming an electrode catalyst layer.

For example, used is a cation exchange resin in which a hydrophobic unit being composed of divalent hydrophobic groups including a bisphenol residue having an alicyclic structure, which are repeated via carbon-carbon bond, a hydrophobic unit being composed of hydrophobic groups of a plurality of aromatic rings bonded to each other via a divalent fluorine-containing hydrocarbon group, which are repeated via carbon-carbon bond, and a hydrophilic unit having an aromatic bonded to a cation exchange group-containing group are bonded via carbon-carbon bond.

## Description

### TECHNICAL FIELD

This invention relates to a cation exchange resin, a cation exchange membrane, an electrolyte membrane, a binder for forming an electrode catalyst layer, and a battery electrocatalyst layer.

### BACKGROUND ART

A cation exchange resin, comprising: a divalent hydrophobic unit represented by the following formula; and a divalent hydrophilic unit being composed of divalent hydrophilic groups repeated via carbon-carbon bond, in which the divalent hydrophilic group is composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond, and in which at least one of the aromatic rings comprises a cation exchange group; wherein the hydrophobic unit and the hydrophilic unit are bonded to each other via carbon-carbon bond is known (Patent Document 1).

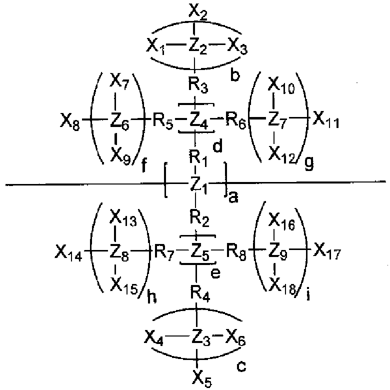

### PRIOR ART DOCUMENT

### PATENT DOCUMENT

Patent Document 1: JP 2017-14423 A

### SUMMARY OF THE INVENTION

### PROBLEM TO BE SOLVED BY THE INVENTION

Although the cation exchange resin described in Patent Document 1 has successfully improved chemical properties (durability, solubility, and inhibition effect of gas permeability) and mechanical properties (flexibility), it is desired to further improve chemical properties (especially, gas permeability). In particular, since binders for forming an electrode catalyst layer are required to adjust and control gas diffusivity, it is desired to further improve gas permeability, considering the use of the cation exchange resin described in Patent Document 1 as a binder for forming an electrode catalyst layer.

Accordingly, an object of the present invention is to provide a cation exchange resin being capable of producing a cation exchange membrane, an electrolyte membrane, a binder for forming an electrode catalyst layer, and a battery electrode catalyst layer, which has excellent electrical properties (cation conductivity) and chemical properties (gas permeability and water uptake property); a cation exchange membrane, an electrolyte membrane, and a binder for forming an electrode catalyst layer, which is formed from the cation exchange resin; and a battery electrode catalyst layer which is formed from the binder for forming an electrode catalyst layer.

### MEANS OF SOLVING THE PROBLEM

In order to solve the aforementioned problems, a cation exchange resin of the present invention comprises:
a divalent hydrophobic group (a) comprising a bisphenol residue represented by following formula (1);
a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to a cation exchange group-containing group;
wherein the cation exchange resin comprises:
   a hydrophobic unit (a) being composed of the hydrophobic group (a) alone, or being composed of a plurality of the hydrophobic groups (a) repeated via ether bond, thioether bond, or carbon-carbon bond;
   a hydrophobic unit (b) being composed of the hydrophobic group (b) alone, or being composed of a plurality of the hydrophobic groups (b) repeated via ether bond, thioether bond, or carbon-carbon bond; and
   a hydrophilic unit being composed of the hydrophilic group alone, or being composed of a plurality of the hydrophilic groups repeated via carbon-carbon bond; and
   wherein the hydrophobic unit (a), the hydrophobic unit (b), and the hydrophilic unit are bonded via ether bond, thioether bond, or carbon-carbon bond. 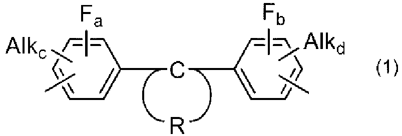
(In the formula, Alk are same or different from each other and represent an alkyl group or an aryl group; R represents a divalent hydrocarbon group forming an alicyclic structure; and a, b, c, and d are same or different from each other and represent an integer of 0 to 4.)

In the cation exchange resin of the present invention, it is suitable that the hydrophobic group (a) comprises a bisphenol residue represented by following formula (1'). 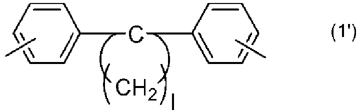 (In the formula, l represents an integer of 2 or more.)

In the cation exchange resin of the present invention, it is suitable that the hydrophobic group (b) comprises a bisphenol residue represented by following formula (2). 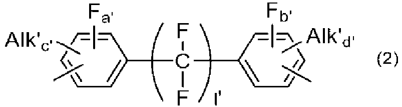 (In the formula, Alk' are same or different from each other and represent an alkyl group or an aryl group; a', b', c', and d' are same or different from each other and represent an integer of 0 to 4; and l' represents an integer of 1 or more.)

In the cation exchange resin of the present invention, it is suitable that the hydrophobic group (b) comprises a bisphenol residue represented by following formula (2'). 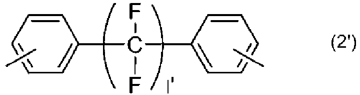 (In the formula, l' represents an integer of 1 or more.)

In the cation exchange resin of the present invention, it is suitable that the hydrophobic group (b) comprises a bisphenol residue represented by following formula (3). 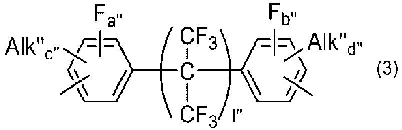 (In the formula, Alk" are same or different from each other and represent an alkyl group or an aryl group; a", b", c", and d" are same or different from each other and represent an integer of 0 to 4; and l" represents an integer of 1 or more.)

In the cation exchange resin of the present invention, it is suitable that the hydrophobic group (b) comprises a bisphenol residue represented by following formula (3'). 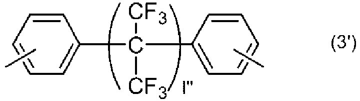 (In the formula, l" represents an integer of 1 or more.)

In the cation exchange resin of the present invention, it is suitable that the hydrophilic group comprises a bisphenol residue represented by following formula (4). 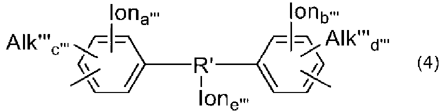 (In the formula, Alk‴ are same or different from each other and represent an alkyl group or an aryl group; Ion are same or different from each other and represent a cation exchange group-containing group; R' represents a hydrocarbon group, a silicon-containing group, a nitrogen-containing group, a phosphorus-containing group, an oxygen-containing group, a sulfur-containing group, or carbon-carbon bond, which may be substituted with the cation exchange group-containing group; c‴ and d‴ are same or different from each other and represent an integer of 0 to 4; and a"', b"', and e‴ are same or different from each other and represent an integer of 0 to 4, and at least one of a"', b"', and e‴ represent 1 or more.)

In the cation exchange resin of the present invention, it is suitable that the hydrophilic group is an o-, m-, or p-phenylene residue represented by following formula (5). 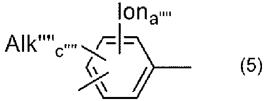 (In the formula, Alkʺʺ represents an alkyl or aryl group; Ion represents a cation exchange group-containing group; cʺʺ represents an integer of 0 to 4; and aʺʺ represents an integer of 1 to 4.)

In order to solve the aforementioned problems, a cation exchange membrane of the present invention comprises a cation exchange resin described above.

In order to solve the aforementioned problems, a cation exchange membrane of the present invention comprises a cation exchange resin described above.

### EFFECT OF THE INVENTION

According to the present invention, a cation exchange resin being capable of producing a cation exchange membrane, an electrolyte membrane, a binder for forming an electrode catalyst layer, and a battery electrode catalyst layer, which has excellent electrical properties (cation conductivity) and chemical properties (gas permeability and water uptake property); a cation exchange membrane, an electrolyte membrane, and a binder for forming an electrode catalyst layer, which is formed from the cation exchange resin; and a battery electrode catalyst layer which is formed from the binder for forming an electrode catalyst layer can be provided.

### BRIEF DESCRIPTION OF DRAWINGS

FIG. 1 is a graph showing the results of hydrogen gas permeability for the samples obtained in the Examples and Comparative Examples.
FIG. 2 is a graph showing the results of oxygen gas permeability for the samples obtained in the Examples and Comparative Examples.
FIG. 3 is a graph showing the results of cation conductivity for the samples obtained in the Examples and Comparative Examples.
FIG. 4 is a graph showing the results of water uptake for the samples obtained in the Examples and the Comparative Examples.

### MODE FOR CARRYING OUT THE INVENTION

A cation exchange resin of the present invention is composed of a divalent hydrophobic group (a), a divalent hydrophobic group (b), and a divalent hydrophilic group.

In a cation exchange resin of the present invention, examples of the divalent hydrophobic group (a) include those containing a bisphenol residue represented by the following formula (1). 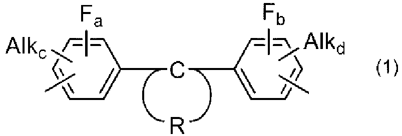 (In the formula, Alk are the same or different from each other and represent an alkyl group or an aryl group; R represents a divalent hydrocarbon group forming an alicyclic structure; and a, b, c, and d are the same or different from each other and represent an integer of 0 to 4.)

In the above formula (1), Alk are the same or different from each other and represent an alkyl group or an aryl group. Examples of the alkyl group include, for example, alkyl groups having a carbon number of 1 to 20 such as methyl group, ethyl group, propyl group, i-propyl group, butyl group, i-butyl group, sec-butyl group, t-butyl group, pentyl group, hexyl group, heptyl group, and octyl group; and cycloalkyl groups having a carbon number of 1 to 20 such as cyclopropyl group, cyclobutyl group, cyclopentyl group, cyclohexyl group, cycloheptyl group, and cyclooctyl group. Examples of the aryl group include, for example, phenyl group, biphenyl group, naphthyl group, and fluorenyl group.

In the above formula (1), R represents a divalent hydrocarbon group forming an alicyclic structure. Examples of the alicyclic structure include monocyclic cycloalkane structures such as cyclopropane, cyclobutane, cyclopentane, cyclohexane, cycloheptane, cyclooctane, cyclononane, cyclodecane, cycloundecane, cyclododecane, cyclotridecane, cyclotetradecane, cyclopentadecane, cyclohexadecane, cycloheptadecane, cyclooctadecane, cyclononadecane, and cycloicosane; monocyclic cycloalkene structures such as cyclopropene, cyclobutene, cyclopropene, cyclohexene, cycloheptene, and cyclooctene; polycyclic cycloalkane structures such as decahydronaphthalene, norbornane, cubane, adamantane, and dodecahedrane; polycyclic cycloalkene structures such as norbornene; spirocyclic structures such as spiro[3.4]octane, spiro[4.5]decane, and spiro[5.5]undecane; cyclic structures having one heteroatom such as pyrrolidine, piperidine, tetrahydrofuran, tetrahydropyran, phosphorane, phosphinane, tetrahydrothiophene, and thiane; cyclic structures having two heteroatoms such as imidazolidine, pyrazolidine, oxazolidine, isoxazolidine, thiazolidine, isothiazolidine, dioxolane, dithiolane, piperazine, morpholine, thiomorpholine, dioxane, and dithiane; cyclic structures having three heteroatoms such as hexahydro-1,3,5-triazine, trioxane, and trithiane; and cyclic structures by combining these.

The alicyclic structure described above may be substituted with an alkyl group, an aryl group, a halogen atom, or the like. Examples of the alkyl group include alkyl groups described above. Examples of the aryl group include aryl groups described above. Examples of the halogen atom include fluorine atom, chlorine atom, bromine atom, and iodine atom. In the case where the alicyclic structure is substituted with an alkyl group or an aryl group, the substituted number and the substituted position of the alkyl group or the aryl group are appropriately set according to the purpose and the application.

In the above formula (1), a and b are the same or different from each other and represent an integer of 0 to 4, and preferably represent an integer of 0 to 2. Further preferably, both a and b represent 0.

In the above formula (1), c and d are the same or different from each other and represent an integer of 0 to 4, and preferably represent an integer of 0 to 2. Further preferably, both c and d represent 0.

Examples of such hydrophobic group (a) include, for example, following structures.

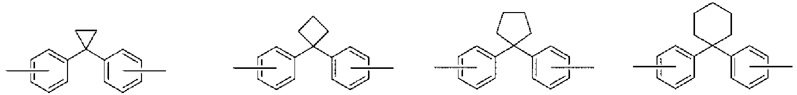

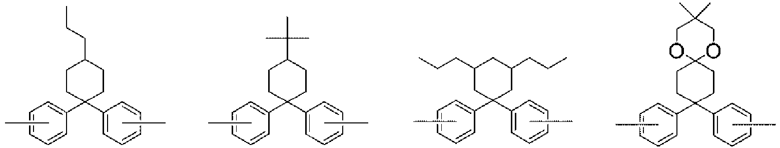

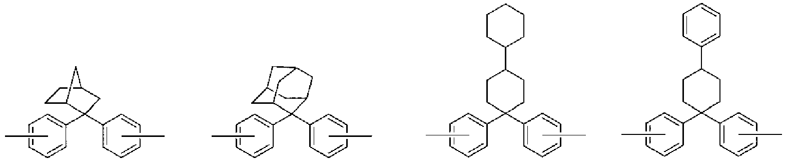

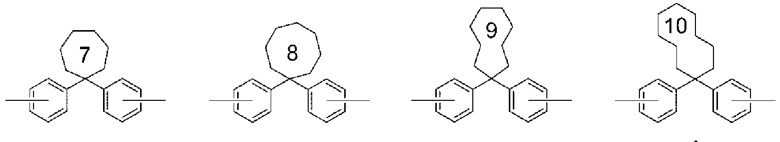

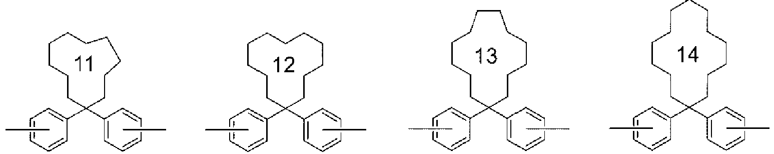

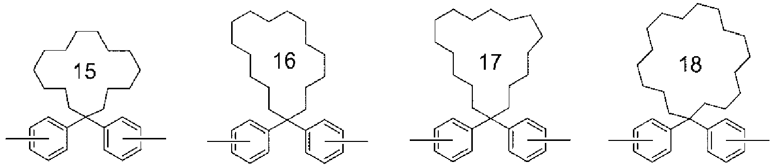

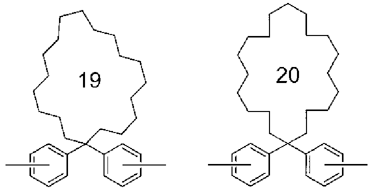

Preferred examples of such hydrophobic group (a) include bisphenol residues represented by the following formula (1').

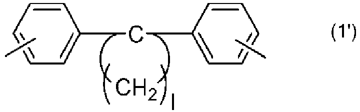

### (In the formula, l represents an integer of 2 or more.)

In the above formula (1'), l represents an integer of 2 or more, represents preferably an integer of 3 to 20, and represents more preferably an integer of 5 to 8.

In a cation exchange resin of the present invention, examples of the divalent hydrophobic group (b) include those composed of a singular aromatic ring and those composed of a plurality of (2 or more, preferably 2) aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond.

Examples of the aromatic ring include, for example: monocyclic or polycyclic compounds having a carbon number of 6 to 14 such as benzene ring, naphthalene ring, indene ring, azulene ring, fluorene ring, anthracene ring, and phenanthrene ring; and heterocyclic compounds such as azole, oxol, thiophene, oxazole, thiazole, and pyridine.

Preferred examples of the aromatic ring include monocyclic aromatic hydrocarbons having a carbon number of 6 to 14, and more preferred examples include benzene ring.

The aromatic ring may be substituted with a substituent such as a halogen atom, an alkyl group, an aryl group, or a pseudohalide, if needed. Examples of the halogen atom include fluorine atom, chlorine atom, bromine atom, and iodine atom. Examples of the pseudohalide include trifluoromethyl group, -CN, -NC, -OCN, -NCO, - ONC, -SCN, -NCS, -SeCN, -NCSe, -TeCN, -NCTe, and -N₃. Examples of the alkyl group include alkyl groups described above. Examples of the aryl group include aryl groups described above.

In the case where the aromatic ring is substituted with a substituent such as a halogen atom, an alkyl group, an aryl group, or a pseudohalide, the substituted number and the substituted position of the substituent such as a halogen atom, an alkyl group, an aryl group, or a pseudohalide are appropriately set according to the purpose and the application.

More specifically, examples of the aromatic ring substituted with a halogen atom include, for example, benzene ring substituted with one to four halogen atoms (e.g., benzene ring substituted with one to four fluorine atoms, benzene ring substituted with one to four chlorine atoms, benzene ring substituted with one to four bromine atoms, and benzene ring substituted with one to four iodine atoms, in which one to four halogen atoms may be all the same or different).

Examples of the divalent hydrocarbon group include, for example, divalent saturated hydrocarbon groups having a carbon number of 1 to 20 such as methylene (-CH₂-), ethylene, propylene, i-propylene (-C(CH₃)₂-), butylene, i-butylene, sec-butylene, pentylene (pentene), i-pentylene, sec-pentylene, hexylene (hexamethylene), 3-methylpentene, heptylene, octylene, 2-ethylhexylene, nonylene, decylene, i-decylene, dodecylene, tetradecylene, hexadecylene, and octadecylene.

Preferred examples of the divalent hydrocarbon group include saturated divalent hydrocarbon group having a carbon number of 1 to 3, specifically such as methylene (-CH₂-), ethylene, propylene, i-propylene (-C(CH₃)₂-), more preferred examples include methylene (-CH₂-) and isopropylene (-C(CH₃)₂-), and particularly preferred examples include i-propylene (-C(CH₃)₂-).

The divalent hydrocarbon group may be substituted with a monovalent residue in the aromatic ring described above.

Preferred examples of such hydrophobic group (b) include bisphenol residues represented by the following formula (2) and bisphenol residues represented by the following formula (3). 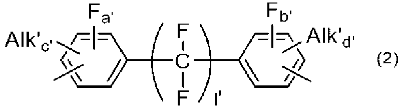 (In the formula, Alk' are the same or different from each other and represent an alkyl group or an aryl group; a', b', c', and d' are the same or different from each other and represent an integer of 0 to 4; and l' represents an integer of 1 or more.) 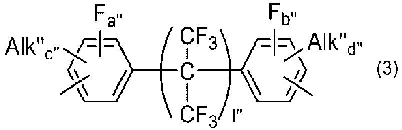 (In the formula, Alk" are the same or different from each other and represent an alkyl group or an aryl group; a", b", c", and d" are the same or different from each other and represent an integer of 0 to 4; and l" represents an integer of 1 or more.)

In the above formula (2), Alk' are the same or different from each other and represent an alkyl group or an aryl group. Examples of the alkyl group include alkyl groups described above. Examples of the aryl group include aryl groups described above.

In the above formula (2), a' and b' are the same or different from each other and represent an integer of 0 to 4, and preferably represent an integer of 0 to 2. Further preferably, both a' and b' represent 0.

In the above formula (2), c' and d' are the same or different from each other and represent an integer of 0 to 4, and preferably represent an integer of 0 to 2. Further preferably, both c' and d' represent 0.

In the above formula (2), l' represents an integer of 1 or more, represents preferably an integer of 1 to 20, and represents more preferably an integer of 2 to 6.

In the above formula (3), Alk" are the same or different from each other and represent an alkyl group or an aryl group. Examples of the alkyl group include alkyl groups described above. Examples of the aryl group include aryl groups described above.

In the above formula (3), a" and b" are the same or different from each other and represent an integer of 0 to 4, and preferably represent an integer of 0 to 2. Further preferably, both a" and b" represent 0.

In the above formula (2), c" and d" are the same or different from each other and represent an integer of 0 to 4, and preferably represent an integer of 0 to 2. Further preferably, both c" and d" represent 0.

In the above formula (2), l" represents an integer of 1 or more, represents preferably an integer of 1 to 20, and represents more preferably an integer of 2 to 6.

Particularly preferred examples of such hydrophobic group (b) include bisphenol residues represented by the following formula (2') and bisphenol residues represented by the following formula (3'). 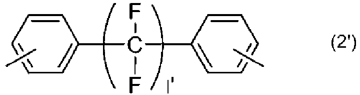 (In the formula, l' represents an integer of 1 or more.) 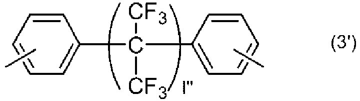 (In the formula, l" represents an integer of 1 or more.)

In the above formula (2'), l' has the same meaning as l' in the above formula (2) and represents an integer of 1 or more, represents preferably an integer of 1 to 20, and represents more preferably an integer of 2 to 6.

In the above formula (3'), l" has the same meaning as l" in the above formula (3) and represents an integer of 1 or more, represents preferably an integer of 1 to 20, and represents more preferably an integer of 2 to 6.

Thus, by introducing a divalent fluorine-containing group into the main chain of the hydrophobic group constituting a hydrophobic unit, the following effects can be obtained.
- The solubility and flexibility are improved by the main chain having low intermolecular interaction.
- The water repellency is provided, and ion conductive paths can be formed by growing phase separation with a hydrophilic moiety (near the ion exchange group).
- The water repellency prevents a hydrophilic hydroxide ion and an oxidant from accessing the main chain (providing improved alkali resistance and chemical stability).
- The rigidity of the main chain can be adjusted and controlled (providing improved flexibility of the electrolyte membrane).
- It can adhere to the catalyst layer due to its low glass transition temperature (providing decreased contact resistance).
- The gas diffusion capability can be adjusted and controlled (providing increased oxygen diffusion capability when used as a binder).

In a cation exchange resin of the present invention, examples of the divalent hydrophilic group include those composed of a singular aromatic ring and those composed of a plurality of aromatic rings which are bonded to each other via a linking group and/or carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to a cation exchange group-containing group.

Examples of the aromatic ring include aromatic rings described above.

Preferred examples of the aromatic ring include monocyclic aromatic hydrocarbons having a carbon number of 6 to 14, and more preferred examples include benzene ring.

The aromatic ring may be substituted with a substituent such as a halogen atom, an alkyl group, an aryl group, or a pseudohalide, as described above, if needed. In the case where the aromatic ring is substituted with a substituent such as a halogen atom, an alkyl group, an aryl group, or a pseudohalide, the substituted number and the substituted position of the substituent such as a halogen atom, an alkyl group, an aryl group, or a pseudohalide are appropriately set according to the purpose and the application.

Examples of the divalent hydrocarbon group include divalent hydrocarbon groups described above. The divalent hydrocarbon group may be substituted with a monovalent residue in an aromatic ring mentioned above.

The number of the aromatic ring bonded to the divalent hydrocarbon group is one or two and is preferably two.

In the case where one more aromatic ring is bonded to a divalent hydrocarbon group, the hydrocarbon group becomes trivalent. In the case where two more aromatic rings are bonded, the hydrocarbon group becomes tetravalent (carbon atom in the case where the carbon number is 1).

In the case where two aromatic rings are bonded to a divalent hydrocarbon group, those aromatic rings may be bonded to each other via carbon-carbon bond, for example.

The cation exchange group is introduced into the main chain or the side chain of the hydrophilic group. Specifically, the cation exchange group is not particularly limited, and any known cation exchange groups such as sulfonic acid group (-SO₃H), phosphoric acid group (-PO₃H), and carboxylic acid group (-COOH) can be adopted as the cation exchange group. From the viewpoint of the ease of synthesis and the cation conductivity, preferred examples of the cation exchange group include sulfonic acid group.

The cation exchange group-containing group may be a cation-exchange group alone or a residue in which a divalent hydrocarbon group, for example, is bonded to a cation-exchange group.

Preferred examples of the divalent hydrocarbon group include linear saturated hydrocarbon groups such as methylene (-(CH₂)-), ethylene (-(CH₂)₂-), trimethylene (-(CH₂)₃-), tetramethylene (-(CH₂)₄-), pentamethylene (-(CH₂)₅-), hexamethylene (-(CH₂)₆-), heptamethylene (-(CH₂)₇-), and octamethylene (-(CH₂)₈-).

Such cation exchange group-containing group is bonded to a linking group or an aromatic ring of a divalent hydrophilic residue which is composed of a singular aromatic ring or is composed of a plurality of aromatic rings which are bonded to each other via the linking group and/or carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group.

The cation exchange group-containing group need only be bonded to at least one of the linking group or the aromatic rings. The cation exchange group-containing group may be bonded to a plurality of linking groups or aromatic rings, and may be bonded to all linking groups or aromatic rings. A plurality of cation exchange group-containing groups may be bonded to one linking group or aromatic ring.

Preferable examples of such hydrophilic group include bisphenol residues represented by the following formula (4) and o-, m-, or p-phenylene residues represented by the following formula (5). 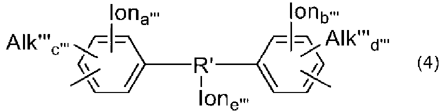 (In the formula, Alk‴ are same or different from each other and represent an alkyl group or an aryl group; Ion are same or different from each other and represent a cation exchange group-containing group; R' represents a hydrocarbon group, a silicon-containing group, a nitrogen-containing group, a phosphorus-containing group, an oxygen-containing group, a sulfur-containing group, or carbon-carbon bond, which may be substituted with the cation exchange group-containing group; c‴ and d‴ are same or different from each other and represent an integer of 0 to 4; and a"', b"', and e‴ are same or different from each other and represent an integer of 0 to 4, and at least one of a"', b"', and e‴ represent 1 or more.) 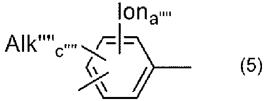 (In the formula, Alkʺʺ represents an alkyl or aryl group; Ion represents a cation exchange group-containing group; cʺʺ represents an integer of 0 to 4; and aʺʺ represents an integer of 1 to 4.)

In the above formula (4), Alk‴ are the same or different from each other and represent an alkyl group or an aryl group. Examples of the alkyl group include alkyl groups described above. Examples of the aryl group include aryl groups described above.

In the above formula (4), Ion are the same or different from each other and represent a cation exchange group-containing group. Examples of the cation exchange group-containing group include cation exchange group-containing groups described above.

In the above formula (4), R' represents a hydrocarbon group, a silicon-containing group, a nitrogen-containing group, a phosphorus-containing group, an oxygen-containing group, a sulfur-containing group, or carbon-carbon bond, and preferably represents a hydrocarbon group or carbon-carbon bond. Examples of the hydrocarbon group include hydrocarbon groups described above.

In the above formula (4), c‴ and d‴ are the same or different from each other and represent an integer of 0 to 4, and preferably represent an integer of 0 to 2. Further preferably, both c‴ and d‴ represent 0.

In the above formula (4), a‴, b"', and e‴ are the same or different from each other and represent an integer of 0 to 4, and at least one of a"', b"', and e‴ represent 1 or more.

In the case where a"', b"', and e‴ are within a range of 1 to 3 in the above formula (4), the substituted position of the cation exchange group-containing group is appropriately set according to the purpose and the application.

In the above formula (5), Alkʺʺ are the same or different from each other and represent an alkyl or aryl group. Examples of the alkyl group include alkyl groups described above. Examples of the aryl group include aryl groups described above.

In the above formula (5), Ion are the same or different from each other and represent a cation exchange group-containing group. Examples of the cation exchange group-containing group include cation exchange group-containing groups described above.

In the above formula (5), cʺʺ represents an integer of 0 to 4, preferably represents an integer of 0 to 2, and further preferably represents 0.

In the above formula (5), aʺʺ represents an integer from 1 to 4. The substituted position of the cation exchange group-containing group is appropriately set according to the purpose and the application.

Other examples of the hydrophilic group include those having the following structure. 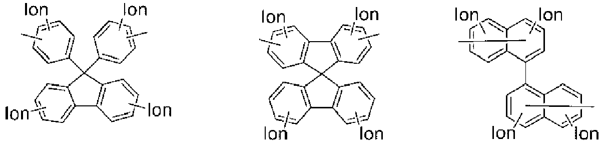 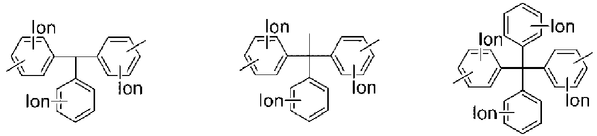 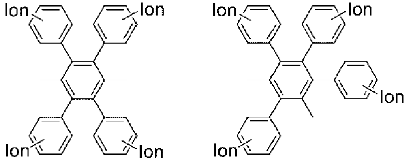 (In the formula, Ion represent a cation exchange group-containing substituent or a hydrogen atom, at least one of which is a cation exchange group-containing substituent. A plurality of Ion may be bonded to one benzene ring structure.)

Particularly preferred examples of such hydrophilic group include a p-phenylene group represented by the following formula (5a) and a m-phenylene group represented by the following formula (5b). 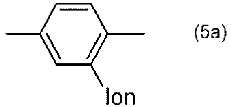 (In the formula, Ion represents a cation exchange group-containing group.) 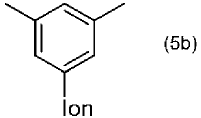 (In the formula, Ion represents a cation exchange group-containing group.)

A cation exchange resin of the present invention includes: a hydrophobic unit (a) being composed of the hydrophobic group (a) alone, or being composed of a plurality of the hydrophobic groups (a) repeated via ether bond, thioether bond, or carbon-carbon bond; a hydrophobic unit (b) being composed of the hydrophobic group (b) alone, or being composed of a plurality of the hydrophobic groups (b) repeated via ether bond, thioether bond, or carbon-carbon bond; and a hydrophilic unit being composed of the hydrophilic group alone, or being composed of a plurality of the hydrophilic groups repeated via carbon-carbon bond. The hydrophobic unit (a) is preferably composed of the hydrophobic group (a) alone, or composed of a plurality of the hydrophobic groups (a) repeated via carbon-carbon bond. The hydrophobic unit (b) is preferably composed of the hydrophobic group (b) alone, or composed of a plurality of the hydrophobic groups (b) repeated via carbon-carbon bond.

The unit corresponds to a block in a block copolymer generally used.

Preferred examples of the hydrophobic unit (a) include units formed by the bisphenol residues represented by the above formula (1) bonded to each other via carbon-carbon bond. The bisphenol residue represented by the above formula (1) may also be a unit formed by multiple species bonded to each other in random form, in ordered form including alternating, or in block form.

Such hydrophobic unit (a) is represented, for example, by the following formula (11). 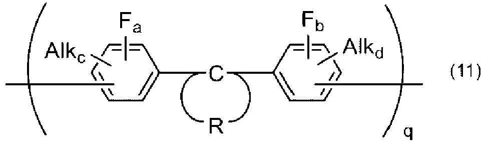 (In the formula, R, Alk, a, b, c, and d respectively have the same meaning as R, Alk, a, b, c, and d in the above formula (1); and q represents 1 to 200.)

In the above formula (11), q represents, for example, 1 to 200, and preferably represents 1 to 50.

Further preferred examples of the hydrophobic unit (a) include units formed by the bisphenol residues represented by the above formula (1') bonded to each other via carbon-carbon bond.

Such hydrophobic unit (a) is represented, for example, by the following formula (11'). 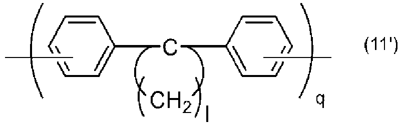 (In the formula, l has the same meaning as l in the above formula (1'); and q represents 1 to 200.)

In the above formula (11'), q represents, for example, 1 to 200, and preferably represents 1 to 50.

Preferred examples of the hydrophobic unit (b) include units formed by the divalent hydrophobic groups (b) bonded to each other via carbon-carbon bond in which the hydrophobic group (b) is composed of a singular aromatic ring or is composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond. The above hydrophobic group (b) may also be a unit formed by multiple species bonded to each other in random form, in ordered form including alternating, or in block form.

Further preferred examples of such hydrophobic unit (b) include units formed by the bisphenol residues represented by the above formula (2) bonded to each other via carbon-carbon bond and units formed by the bisphenol residues represented by the above formula (3) bonded to each other via carbon-carbon bond.

Such hydrophobic unit (b) is represented, for example, by the following formula (12) or the following formula (13). 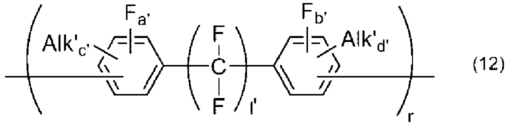 (In the formula, Alk', a', b', c', d', and l' respectively have the same meaning as Alk', a', b', c', d', and l' in the above formula (2); and r represents 1 to 200.) 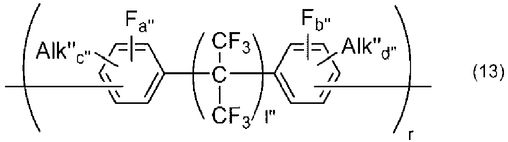 (In the formula, Alk", a", b", c", d", and l" respectively have the same meaning as Alk", a", b", c", d", and l" in the above formula (3); and r represents 1 to 200.)

In the above formula (12) and the above formula (13), r represents, for example, 1 to 200, and preferably represents 1 to 50.

Particularly preferred examples of such hydrophobic unit (b) include units formed by the bisphenol residues represented by the above formula (2') bonded to each other via carbon-carbon bond and units formed by the bisphenol residues represented by the above formula (3') bonded to each other via carbon-carbon bond.

Such hydrophobic unit (b) is represented, for example, by the following formula (12') or the following formula (13'). 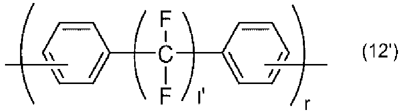 (In the formula, l' has the same meaning as l' of the above formula (2'); and r represents 1 to 200.) 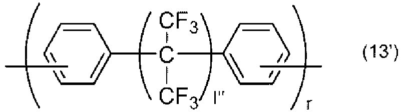 (In the formula, l" has the same meaning as l" of the above formula (3'); and r represents from 1 to 200.)

In the above formula (12') and the above formula (13'), r represents, for example, 1 to 200, and preferably represents 1 to 50.

Examples of the hydrophilic unit include units formed by the divalent hydrophilic groups bonded to each other via carbon-carbon bond in which the hydrophilic group is composed of a singular aromatic ring or is composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond, and in which at least one of the linking group or the aromatic ring is bonded to a cation exchange group-containing group. The divalent hydrophilic group may also be a unit formed by multiple species bonded to each other in random form, in ordered form including alternating, or in block form.

More preferred examples of the hydrophilic unit include units formed by the bisphenol residues represented by the above formula (4) bonded to each other via carbon-carbon bond.

Such hydrophilic unit is represented, for example, by the following formula (14). 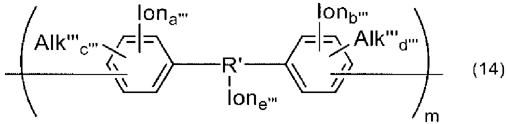 (In the formula, Alk"', Ion, R', a‴, b"', c‴, d"', and e‴ respectively have the same meaning as Alk‴, Ion, R', a‴, b"', c'", d"', and e‴ in the above formula (4); and m represents 1 to 200.)

In the above formula (14), m represents, for example, 1 to 200, and preferably represents 1 to 50.

More preferred examples of the hydrophilic unit include units formed by the o-, m- or p-phenylene residues represented by the above formula (5) bonded to each other via carbon-carbon bond.

Such hydrophilic unit is represented, for example, by the following formula (15). 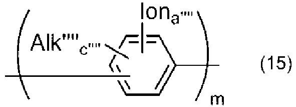 (In the formula, Alkʺʺ, Ion, aʺʺ, and cʺʺ respectively have the same meaning as Alkʺʺ, Ion, a"", and cʺʺ in the above formula (5); and m represents 1 to 200.)

In the above formula (15), m represents, for example, 1 to 200, and preferably represents 1 to 50.

Particularly preferred examples of such hydrophilic unit include units formed by the p-phenylene groups represented by the above formula (5a) bonded to each other via carbon-carbon bond and units formed by the m-phenylene groups represented by the above formula (5b) bonded to each other via carbon-carbon bond.

Such hydrophilic unit is represented, for example, by the following formula (15a) or the following formula (15b). 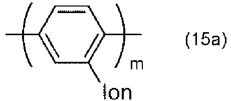 (In the formula, Ion has the same meaning as Ion in the above formula (5a); and m represents 1 to 200.) 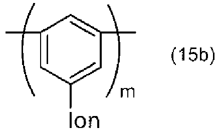 (In the formula, Ion has the same meaning as Ion in the above formula (5b); and m represents 1 to 200.)

In the above formula (15a) and the above formula (15b), m represents, for example, 1 to 200, and preferably represents 1 to 50.

In the cation exchange resin of the present invention, the above hydrophobic unit (a), the above hydrophobic unit (b), and the above hydrophilic unit are bonded via ether bond, thioether bond, or carbon-carbon bond. In particular, the above hydrophobic unit (a), the above hydrophobic unit (b), and the above hydrophilic unit are preferably bonded via carbon-carbon bond.

Preferred examples of such cation exchange resin include cation exchange resins in which the hydrophobic unit (a) represented by the above formula (11), the hydrophobic unit (b) represented by the above formula (12) or the above formula (13), and the hydrophilic unit represented by the above formula (14) or the above formula (15) are bonded via carbon-carbon bond.

Such cation exchange resin is represented, for example, by the following formula (17), the following formula (17'), the following formula (18), or the following formula (18'). 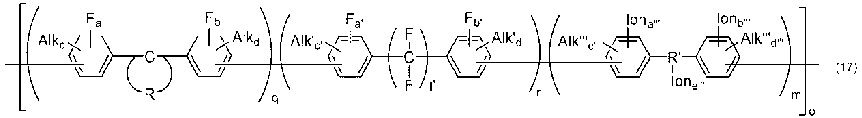 (In the formula, R, Alk, a, b, c, and d respectively have the same meaning as R, Alk, a, b, c, and d in the above formula (11); Alk', a', b', c', d' and l' respectively have the same meaning as Alk', a', b', c', d', and l' in the above formula (12); Alk‴, Ion , R', a‴, b"', c‴, d"', and e‴ respectively have the same meaning as Alk"', Ion, R', a"', b"', c‴, d"', and e‴ in the above formula (14); q, r, and m show a blending ratio or a repeating number and represent 1 to 200; and o shows a repeating number and represents 1 to 100.) 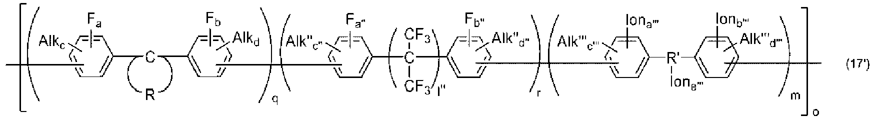 (In the formula, R, Alk, a, b, c, and d respectively have the same meaning as R, Alk, a, b, c, and d in the above formula (11); Alk", a", b", c", d" and l" respectively have the same meaning as Alk", a", b", c", d", and l" in the above formula (13); Alk"', Ion, R', a‴, b‴, c"', d"', and e‴ respectively have the same meaning as Alk"', Ion, R', a"', b"', c‴, d‴, and e‴ in the above formula (14); q, r, and m show a blending ratio or a repeating number and represent 1 to 200; and o shows a repeating number and represents 1 to 100.) 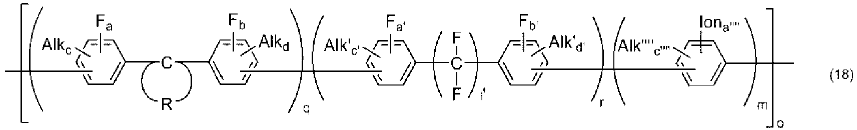 (In the formula, R, Alk, a, b, c, and d respectively have the same meaning as R, Alk, a, b, c, and d in the above formula (11); Alk', a', b', c', d' and l' respectively have the same meaning as Alk', a', b', c', d', and l' in the above formula (12); Alkʺʺ, Ion, aʺʺ, and cʺʺ respectively have the same meaning as Alk"", Ion, a"", and cʺʺ in the above formula (15); q, r, and m show a blending ratio or a repeating number and represent 1 to 200; and o shows a repeating number and represents 1 to 100.) 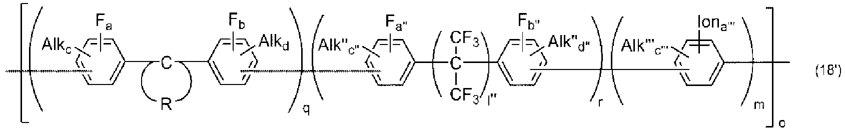 (In the formula, R, Alk, a, b, c, and d respectively have the same meaning as R, Alk, a, b, c, and d in the above formula (11); Alk", a", b", c", d" and l" respectively have the same meaning as Alk", a", b", c", d", and l" in the above formula (13); Alkʺʺ, Ion, a"", and cʺʺ respectively have the same meaning as Alk"", Ion, a"", and cʺʺ in the above formula (15); q, r, and m show a blending ratio or a repeating number and represent 1 to 200; and o shows a repeating number and represents 1 to 100.)

Further preferred examples of such cation exchange resin include cation exchange resins in which the hydrophobic unit (a) represented by the above formula (11'), the hydrophobic unit (b) represented by the above formula (12') or the above formula (13'), and the hydrophilic unit represented by the above formula (15a) or the above formula (15b) are bonded via carbon-carbon bond.

Such cation exchange resin is represented, for example, by the following formula (18a), the following formula (18a'), the following formula (18b), or the following formula (18b'). 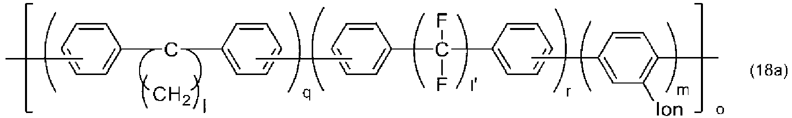 (In the formula, l has the same meaning as l in the above formula (11'); l' has the same meaning as l' in the above formula (12'); Ion has the same meaning as Ion in the above formula (15a); q, r, and m show a blending ratio or a repeating number and represent 1 to 200; and o shows a repeating number and represents 1 to 100.) 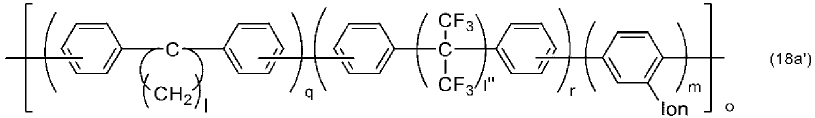 (In the formula, l has the same meaning as l in the above formula (11'); l" has the same meaning as l" in the above formula (13'); Ion has the same meaning as Ion in the above formula (15a); q, r, and m show a blending ratio or a repeating number and represent 1 to 200; and o shows a repeating number and represents 1 to 100.) 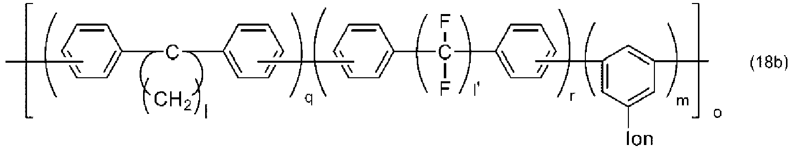 (In the formula, l has the same meaning as l in the above formula (11'); l' has the same meaning as l' in the above formula (12'); Ion has the same meaning as Ion in the above formula (15b); q, r, and m show a blending ratio or a repeating number and represent 1 to 200; and o shows a repeating number and represents 1 to 100.) 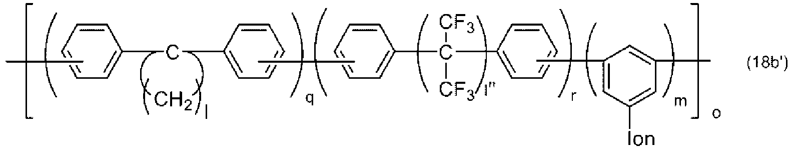 (In the formula, l has the same meaning as l in the above formula (11'); l" has the same meaning as l" in the above formula (13'); Ion has the same meaning as Ion in the above formula (15b); q, r, and m show a blending ratio or a repeating number and represent 1 to 200; and o shows a repeating number and represents 1 to 100.)

In the cation exchange resin of the present invention, q, r, and m show a blending ratio or a repeating number and o shows a repeating number, all of which are appropriately set according to the purpose and application. However, the percentage (q/(q+r)×100) of the number of the hydrophobic group (a) to the number of the hydrophobic group (the sum of the number of the hydrophobic unit (a) and the number of the hydrophobic unit (b)) contained in the hydrophobic units (hydrophobic unit (a) and hydrophobic unit (b)) in the cation exchange resin of the present invention is preferably 5 to 65, is more preferably 10 to 60, and is further preferably 15 to 55. If the ratio is within this range, the cation exchange resin has excellent gas permeability (in particular, oxygen gas permeability).

The number average molecular weight of such cation exchange resin is, for example, 10 to 1000 kDa, and is preferably 30 to 500 kDa, as mentioned above.

The method for producing the cation exchange resin is not particularly limited and any known methods can be adopted. The method by polycondensation reaction is preferably adopted.

In the case where a cation exchange resin is produced by this method, the cation exchange resin can be produced: by preparing a monomer for forming a hydrophobic group (a); by preparing a monomer for forming a hydrophobic group (b); by preparing a monomer for forming a hydrophilic group having a cation exchange group-containing group; and by polymerizing the monomer for forming a hydrophobic group (a), the monomer for forming a hydrophobic group (b), and the monomer for forming a hydrophilic group having a cation exchange group-containing group to form a polymer. Alternatively, the cation exchange resin can be produced: by preparing a monomer for forming a hydrophobic group (a); by preparing a monomer for forming a hydrophobic group (b); by preparing a monomer for forming a hydrophilic group having a precursor functional group for a cation exchange group-containing group; by polymerizing the monomer for forming a hydrophobic group (a), the monomer for forming a hydrophobic group (b), and the monomer for forming a hydrophilic group having a precursor functional group for a cation exchange group-containing group to form a polymer; and by ionizing the precursor functional group for a cation exchange group-containing group in the polymer. Alternatively, the cation exchange resin can be produced: by preparing a monomer for forming a hydrophobic group (a); by preparing a monomer for forming a hydrophobic group (b); by preparing a monomer for forming a hydrophilic group; by polymerizing the monomer for forming a hydrophobic group (a), the monomer for forming a hydrophobic group (b), and the monomer for forming a hydrophilic group to form a polymer; and by introducing a substitution group having a cation exchange group-containing group into the polymer.

As for the polycondensation reaction, any general method known in the art can be adopted. Cross-coupling which forms carbon-carbon bond is preferably adopted.

Preferred examples of the monomer (a) for forming a hydrophobic group include compounds represented by the following formula (21), which corresponds to the above formula (1). 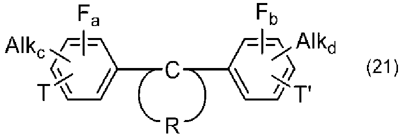 (In the formula, R, Alk, a, b, c, and d respectively have the same meaning as R, Alk, a, b, c, and d in the above formula (1); and T and T' are the same or different from each other and represent a halogen atom, a pseudohalide, boronic acid group, a boronic acid derivative, or hydrogen atom.)

Particularly preferred examples of the monomer (a) for forming a hydrophobic group include compounds represented by the following formula (21'), which corresponds to the above formula (1'). 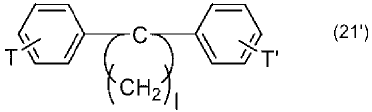 (In the formula, l has the same meaning as l in the above formula (1'); and T and T' are the same or different from each other and represent a halogen atom, a pseudohalide, boronic acid group, a boronic acid derivative, or hydrogen atom.)

Preferred examples of the monomer (b) for forming a hydrophobic group include compounds represented by the following formula (22), which corresponds to the above formula (2), and compounds represented by the following formula (23), which corresponds to the above formula (3). 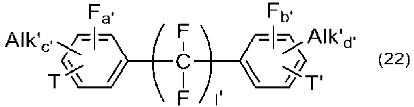 (In the formula, Alk', a', b', c', d', and l' respectively have the same as Alk', a', b', c', d', and l' in the above formula (2); and T and T' are the same or different from each other and represent a halogen atom, a pseudohalide, boronic acid group, a boronic acid derivative, or hydrogen atom.) 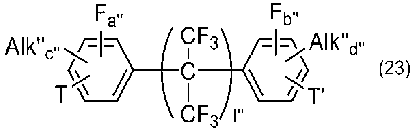 (In the formula, Alk", a", b", c", d", and l" respectively have the same as Alk", a", b", c", and l" in the above formula (3); and T and T' are the same or different from each other and represent a halogen atom, a pseudohalide, boronic acid group, a boronic acid derivative, or hydrogen atom.)

Particularly preferred examples of the monomer (b) for forming a hydrophobic group include compounds represented by the following formula (22'), which corresponds to the above formula (2'), and compounds represented by the following formula (23'), which corresponds to the above formula (3'). 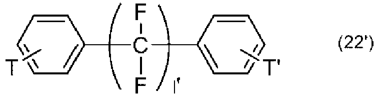 (In the formula, l' has the same meaning as l' in the above formula (2'); and T and T' are the same or different from each other and represent a halogen atom, a pseudohalide, boronic acid group, a boronic acid derivative, or hydrogen atom.) 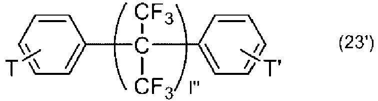 (In the formula, l" has the same meaning as l" in the above formula (3'); and T and T' are the same or different from each other and represent a halogen atom, a pseudohalide, boronic acid group, a boronic acid derivative, or hydrogen atom.)

Preferred examples of the monomer for forming a hydrophilic group having a cation exchange group-containing group include compounds represented by the following formula (24), which corresponds to the above formula (4), and compounds represented by the following formula (25), which corresponds to the above formula (5). 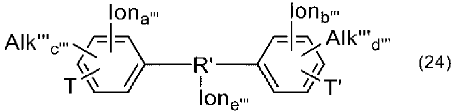 (In the formula, Alk"', Ion, R', a‴, b"', c‴, d"', and e‴ respectively have the same meaning as Alk‴, Ion, R', a‴, b"', c‴, d"', and e‴ in the above formula (4); and T and T' are the same or different from each other and represent a halogen atom, a pseudohalide, boronic acid group, a boronic acid derivative, or hydrogen atom.) 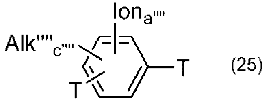 (In the formula, Alkʺʺ, Ion, aʺʺ, and cʺʺ respectively have the same meaning as Alkʺʺ, Ion, a"", and cʺʺ in the above formula (5); and T and T' are the same or different from each other and represent a halogen atom, a pseudohalide, boronic acid group, a boronic acid derivative, or hydrogen atom.)

Particularly preferred examples of the monomer for forming a hydrophilic group having a cation exchange group-containing group include compounds represented by the following formula (25a), which corresponds to the above formula (5a), and compounds represented by the following formula (25b), which corresponds to the above formula (5b). 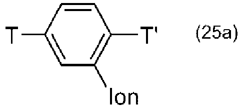 (In the formula, Ion has the same meaning as Ion in the above formula (5a); and T and T' are the same or different from each other and represent a halogen atom, a pseudohalide, boronic acid group, a boronic acid derivative, or hydrogen atom.) 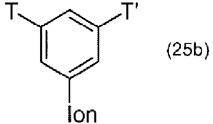 (In the formula, Ion has the same meaning as Ion in the above formula (5b); and T and T' are the same or different from each other and represent a halogen atom, a pseudohalide, boronic acid group, a boronic acid derivative, or hydrogen atom.)

In copolymerizing the monomer for forming a hydrophobic group (a), the monomer for forming a hydrophobic group (b), and the monomer for forming a hydrophilic group having a cation exchange group-containing group by cross-coupling, the blending amount of each monomer is respectively adjusted so as to achieve a desired blending ratio of the hydrophobic unit (a), the hydrophobic unit (b), and the hydrophilic unit in the resulting cation exchange resin.

In these methods, the monomer for forming hydrophobic group (a), the monomer for forming hydrophobic group (b), and the monomer for forming hydrophilic group having a cation exchange group-containing group can be dissolved in a solvent such as N,N-dimethylacetamide or dimethyl sulfoxide, for example; and the polymerization can be carried out with bis(cycloocta-1,5-diene)nickel(0) as a catalyst. Any other known methods can be adopted.

The reaction temperature in the cross-coupling reaction is, for example, -100 to 300°C, and is preferably -50 to 200°C. The reaction time is, for example, 1 to 48 hours, and is preferably 2 to 5 hours.

By coupling the compound represented by the above formula (21), the compound represented by the above formula (22), and the compound represented by the above formula (24), a cation exchange resin represented by the following formula (17) is obtained.

By coupling the compound represented by the above formula (21), the compound represented by the above formula (23), and the compound represented by the above formula (24), a cation exchange resin represented by the following formula (17') is obtained.

By coupling the compound represented by the above formula (21), the compound represented by the above formula (22), and the compound represented by the above formula (25), a cation exchange resin represented by the following formula (18) is obtained.

By coupling the compound represented by the above formula (21), the compound represented by the above formula (23), and the compound represented by the above formula (25), a cation exchange resin represented by the following formula (18') is obtained.

By coupling the compound represented by the above formula (21'), the compound represented by the above formula (22'), and the compound represented by the above formula (25a), a cation exchange resin represented by the following formula (18a) is obtained.

By coupling the compound represented by the above formula (21'), the compound represented by the above formula (23'), and the compound represented by the above formula (25a), a cation exchange resin represented by the following formula (18a') is obtained.

By coupling the compound represented by the above formula (21'), the compound represented by the above formula (22'), and the compound represented by the above formula (25b), a cation exchange resin represented by the following formula (18b) is obtained.

By coupling the compound represented by the above formula (21'), the compound represented by the above formula (23'), and the compound represented by the above formula (25b), a cation exchange resin represented by the following formula (18b') is obtained.

In the case where a monomer for forming a hydrophilic group having a precursor functional group for a cation exchange group-containing group is used, a cation exchange resin can be obtained by ionizing the precursor functional group for a cation exchange group-containing group in the resulting polymer. The method by ionization is not limited and any known methods can be adopted. For example, the method by dissolving the polymer in an appropriate solvent in which the polymer is dissolved and by ionizing the precursor functional group can be adopted. The reaction temperature in the ionization reaction depends on the amount of ionic group introduced, but is generally -20 to 100°C, and is preferably 20 to 80°C. The reaction time is, for example, 2 to 120 hours, and is preferably 5 to 72 hours.

In the case where a monomer for forming a hydrophilic group which does not have a cation exchange group-containing group is used, a cation exchange resin can be obtained by introducing a cation exchange group-containing group to the resulting polymer. The method for introducing a cation exchange group-containing group is not limited and any known methods can be adopted. For example, a cation exchange group-containing group can be introduced by aromatic electrophilic substitution reaction using sulfuric acid, chlorosulfuric acid, sulfur trioxide, or the like.

The ion exchange group capacity of the cation exchange resin is, for example, 0.1 to 5.0 meq./g, and is preferably 0.5 to 4.0 meq./g.

The ion exchange group capacity can be calculated by the following equation (30). [ion exchange group capacity (meq./g)] = the amount of the cation exchange group introduced per the hydrophilic unit × the repeating unit of the hydrophilic unit × 1000 / (the molecular weight of the hydrophobic unit × the repeating unit number of the hydrophobic unit + the molecular weight of the hydrophilic unit × the repeating unit number of the hydrophilic unit + the molecular weight of the ion exchange group × the repeating unit number of the hydrophilic unit) (30)

The amount of the ion exchange group introduced is defined as the number of the ion exchange group per unit of the hydrophilic group. The amount of the cation exchange group introduced is a mole number (mol) of the cation exchange group introduced in the main chain or the side chain of the hydrophilic group.

Such cation exchange resin has: a divalent hydrophobic group (a) comprising a bisphenol residue represented by the above formula (1); a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and a divalent hydrophilic group being composed of a singular aromatic ring, or being composed of a plurality of aromatic rings which are bonded to each other via a linking group and/or carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to a cation exchange group-containing group; in which the cation exchange resin has: a hydrophobic unit (a) being composed of the hydrophobic group (a) alone, or being composed of a plurality of the hydrophobic groups (a) repeated via ether bond, thioether bond, or carbon-carbon bond; a hydrophobic unit (b) being composed of the hydrophobic group (b) alone, or being composed of a plurality of the hydrophobic groups (b) repeated via ether bond, thioether bond, or carbon-carbon bond; and a hydrophilic unit being composed of the hydrophilic group alone, or being composed of a plurality of the hydrophilic groups repeated via carbon-carbon bond; and in which the hydrophobic unit (a), the hydrophobic unit (b), and the hydrophilic unit are bonded via ether bond, thioether bond, or carbon-carbon bond. Thus, this cation exchange resin has excellent electrical properties (cation conductivity) and chemical properties (gas permeability and water uptake property) due to the introduction of the divalent hydrophobic group (a) and the divalent hydrophilic group.

In particular, since the cation exchange resin has a hydrophilic unit being composed of hydrophilic groups repeated via carbon-carbon bond (i.e., no ether bond is contained), the cation exchange resin has excellent durability such as radical resistance. More specifically, if the hydrophilic unit has an ether bond, the decomposition by hydroxide radical (·OH) as described below may occur, for example, and radical resistance may not be sufficient.

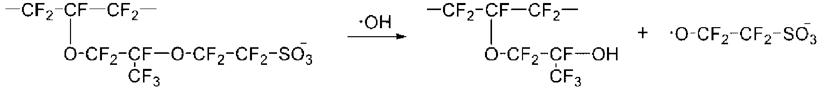

In contrast, since the hydrophilic unit of the cation exchange resin having a hydrophilic unit being composed of the hydrophilic groups repeated via carbon-carbon bond does not have any ether bond, the decomposition by the mechanism described above does not occur, and therefore the cation exchange resin has excellent durability such as radical resistance.

The present invention includes a cation exchange membrane containing a cation exchange resin described above.

The cation exchange membrane can be reinforced, for example, with a known reinforcing material such as a porous substrate, and can also be subjected to various treatments such as biaxial stretching treatment to control the molecular orientation and heat treatments to control crystallinity and residual stress. Known fillers can be added to the cation exchange membrane to increase the mechanical strength, and the cation exchange membrane can be composited with a reinforcing agent such as a glass nonwoven fabric by pressing.

In addition, a various additive normally used in cation exchange membranes, such as compatibilizers to improve compatibility, antioxidants to prevent resin degradation, antistatic agents and lubricants to improve the handling during the film forming and processing may be included as needed to the extent that they do not affect processing and performance as a cation exchange membrane.

The thickness of the cation exchange membrane is not particularly limited and can be set according to the purpose and application. The thickness of the cation exchange membrane is, for example, from 1 to 350 µm, and is preferably from 5 to 200 µm.

The present invention includes an electrolyte membrane containing a cation exchange resin described above. An electrolyte membrane of the present invention is applicable to various electrochemical applications such as fuel cells, water electrolysis hydrogen generators, and electrochemical hydrogen pumps, but is particularly suitable for use in water electrolysis hydrogen generators. In fuel cells, electrochemical hydrogen pumps, and water electrolysis hydrogen generators, the electrolyte membrane is used in a structural state in which catalyst layers, electrode substrates, and separators are sequentially laminated on both sides. Among these, the structure material with catalyst layers and gas diffusion substrates sequentially laminated on both sides of the electrolyte membrane (with a layer structure of gas diffusion substrate/catalyst layer/electrolyte membrane/catalyst layer/gas diffusion substrate) is called membrane electrode assembly (MEA). An electrolyte membrane of the present invention is suitably used as an electrolyte membrane that constitutes an MEA.

The cation exchange resin described above can be used as an electrolyte membrane (i.e., the electrolyte membrane contains a cation exchange resin described above).

The electrolyte membrane can be reinforced, for example, with a known reinforcing material such as a porous substrate, and can also be subjected to various treatments such as biaxial stretching treatments to control the molecular orientation and heat treatments to control crystallinity and residual stress. Known fillers can be added to the electrolyte membrane to increase the mechanical strength, and the electrolyte membrane can be composited with a reinforcing agent such as a glass nonwoven fabric by pressing.

In addition, various additives normally used in electrolyte membranes, such as compatibilizers to improve compatibility, antioxidants to prevent resin degradation, and antistatic agents and lubricants to improve the handling during the film forming and processing may be included as needed to the extent that they do not affect processing and performance as an electrolyte membrane.

The thickness of the electrolyte membrane is not particularly limited and is suitably set according to the purpose and application.

The thickness of the electrolyte membrane is, for example, 1.2 to 350 µm, and is preferably 5 to 200 µm.

The present invention also includes a binder for forming the electrode catalyst layer containing a cation exchange resin described above, and a battery electrode catalyst layer containing a binder for forming the electrode catalyst layer. Since the cation exchange resin described above has excellent cation conductivity and gas permeability, gas diffusivity can easily be adjusted and controlled by using it as a binder for forming the electrode catalyst layer.

Specifically, as the method for including the cation exchange resin in the binder for forming an electrode catalyst layer, for example, the binder for forming the electrode catalyst layer is prepared by cutting the cation exchange resin into pieces, and then dissolving the resin in a suitable amount of an organic solvent such as amides and alcohols.

In the binder for forming the electrode catalyst layer, the amount of the cation exchange resin is, for example, 2 to 10 parts by weight, and preferably 2 to 5 parts by weight with respect to 100 parts by weight of the binder for forming the electrode catalyst layer.

By using the binder for forming an electrode catalyst layer for the formation of the catalyst layer of the electrode (the battery electrode catalyst layer), the cation exchange resin can be included in the catalyst layer (the battery electrode catalyst layer).

Although the embodiments of the present invention have been described hereinabove, embodiments of the present invention are not limited to these embodiments, but may be modified as appropriate to the extent which does not change the scope of the invention.

### EXAMPLE

The present invention is described based on the Examples and the Comparative Examples, but the present invention is not limited by the following Examples.

### [Example 1: Synthesis of cation exchange resin SBAFC6₁₇ (IEC = 2.4 meq./g)]

### <Synthesis of monomer 1>

To a 300 mL round-shaped three-necked flask equipped with a nitrogen inlet and a condenser were added cyclohexanone (12.0 g, 122 mmol), aniline (50.0 g, 536 mmol), and 12 M hydrochloric acid (40.0 mL). The temperature was gradually increased and the mixed solution was stirred at 80°C for 24 hours. The solution was then allowed to cool, and ion-exchanged water (80.0 mL) and sodium hydroxide were added to neutralize the solution. The target product was extracted from the reaction solution with ethyl acetate, and the resulting organic phase was washed with water and was dehydrated with sodium sulfate. This solution was concentrated and aniline was distilled off from the solution under reduced pressure. The crude product obtained was purified using silica gel chromatography (developing solvent: hexane : ethyl acetate = 4:1 → 2:1 → 1:1), and was dried under vacuum for 12 hours to obtain a precursor compound in a yield of 40%.

To a 100 mL eggplant flask were added the precursor compound (1.00 g, 3.75 mmol) and 6 M hydrochloric acid (10 mL). The flask was cooled in an ice bath at 0°C, and H₂O (10 mL) in which NaNO₂ (0.620 g, 8.99 mmol) was dissolved was slowly added dropwise. The reaction was then carried out at 0°C for 30 minutes. After that, concentrated hydrochloric acid (10 mL) in which CuCl (I) (1.50 g, 15.1 mmol) was dissolved was added and the reaction was carried out for 8 hours. The solution was allowed to cool to room temperature and was then filtered through celite using hexane. After that, the product was extracted with hexane and washed with pure water, and was then dehydrated using sodium sulfate. After removing the dehydrating agent by filtration, the solution was concentrated in an evaporator. The resulting residue was purified by silica gel column chromatography (developing solvent: hexane). The resulting solution was concentrated and was dried under vacuum overnight to obtain a monomer 1 represented by the following formula in a yield of 57%.

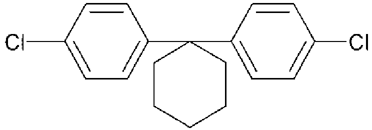

### <Synthesis of monomer 2>

To a 100 mL one-necked eggplant flask were added 2,2-bis(4-aminophenyl)hexafluoropropane (5.00 g, 15.0 mmol) and 6 M hydrochloric acid (60 mL) and the mixture was stirred at room temperature. The flask was cooled in an ice bath at 0°C, and sodium nitrite aqueous solution (2.60 g, 44.9 mmol) was added dropwise. The resultant mixture was stirred for 30 minutes. The solution obtained by dissolving copper (I) chloride (4.50 g) in 12 M hydrochloric acid was added to the reaction solution and the resultant mixture was stirred at room temperature for 1 hour. After the reaction, the reaction was quenched by adding a saturated potassium carbonate solution. The reaction solution was filtered through celite and was washed with water, and the target product was then extracted with toluene. The filtrate was concentrated to obtain a brown solution. The crude product obtained was purified by silica gel column chromatography (developing solvent: hexane) to obtain a crystalline monomer 2 represented by the following formula in 51% yield.

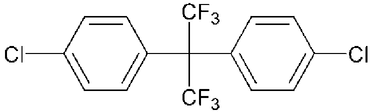

### (Copolymerization reaction)

To a 100 mL round-shaped three-necked flask equipped with a nitrogen inlet and a condenser were added the monomer 1 (0.08 g, 0.27 mmol), the monomer 2 (0.50 g, 1.34 mmol), 2,5-dichlorobenzenesulfonic acid (0.64 g, 2.81 mmol), 2,2'-bipyridine (3.59 g, 23.0 mmol), N,N-dimethylformamide (15 mL), and toluene (15 mL). After the mixture was stirred to form a homogeneous solution, the resultant solution was heated at 170°C for 2 hours for azeotropic dehydration. The solution was then cooled to 80°C and bis(1,5-cyclooctadiene)nickel (0) (3.16 g, 11.6 mmol) was added, and the reaction was carried out for 3 hours. The reaction was quenched by adding the reaction mixture dropwise to 6 M hydrochloric acid. The reaction mixture was filtered to collect the precipitate. The precipitate was washed with 6M hydrochloric acid and with pure water, and was then dried under vacuum (60°C) overnight to obtain a cation exchange resin SBAFC6₁₇ (IEC = 2.7 meq./g) represented by the following formula in a yield of 100% (q/(q+r)×100 = 17, m/(q+r+m)×100 = 64).

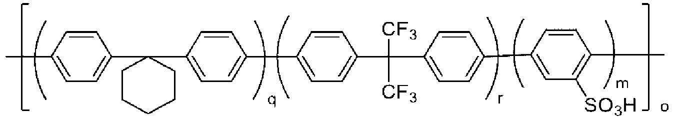

### [Example 2: Synthesis of cation exchange resin SBAFC6₃₀ (IEC = 2.0 meq./g)]

A membrane of a cation exchange resin SBAFC6₃₀ (IEC = 2.1 meq./g) was obtained by a similar method as described above using the above monomer 1, the above monomer 2, and 2,5-dichlorobenzenesulfonic acid with modifying the amount of reagents if needed (q/(q+r)×100 = 30, m/(q+r+m)×100 = 64).

### [Example 3: Synthesis of cation exchange resin SBAFC6₅₀ (IEC = 2.4 meq./g)]

A membrane of a cation exchange resin SBAFC6₅₀ (IEC = 2.4 meq./g) was obtained by a similar method as described above using the above monomer 1, the above monomer 2, and 2,5-dichlorobenzenesulfonic acid with modifying the amount of reagents if needed (q/(q+r)×100 = 50, m/(q+r+m)×100 = 64).

### [Comparative Example 1: Synthesis of cation exchange resin SBAF (IEC = 2.5 meq./g)]

A membrane of a cation exchange resin SBAF (IEC = 2.5 meq./g) represented by the following formula was obtained by a similar method as described above using the above monomer 2 and 2,5-dichlorobenzenesulfonic acid with modifying the amount of reagents if needed (q/(q+r)×100 = 0, m/(q+r+m)×100 = 64).

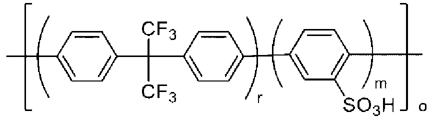

### <Gas permeability>

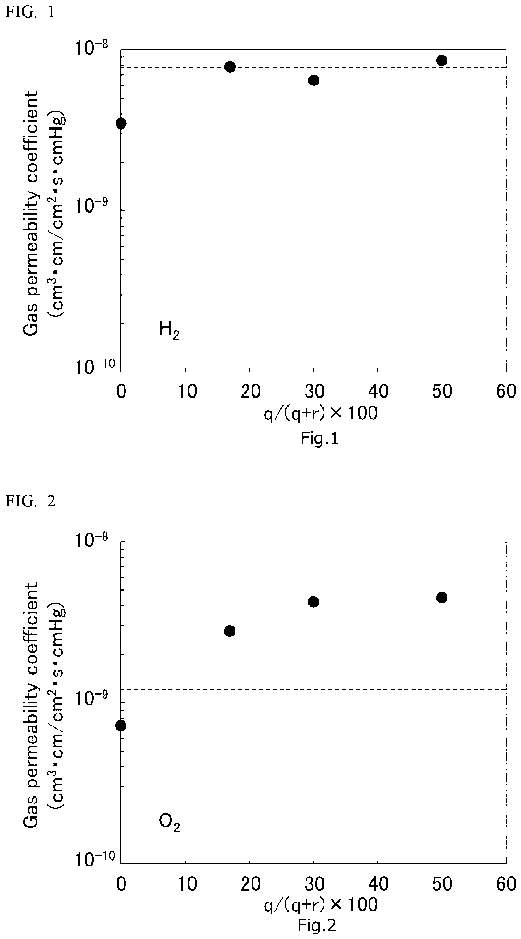

The permeability of hydrogen gas and oxygen gas was measured by gas chromatography under the conditions of 80°C and 0%RH (relative humidity) using a flow-type gas permeability measuring device manufactured by GTR TEC Corporation. The results of the hydrogen gas permeability are shown in FIG. 1, and the results of the oxygen gas permeability are shown in FIG. 2. The dashed lines in FIGS. 1 and 2 are values of the hydrogen gas permeability and the oxygen gas permeability of Nafion 212 (trade name, manufactured by DuPont).

### <Cation conductivity (Proton conductivity)>

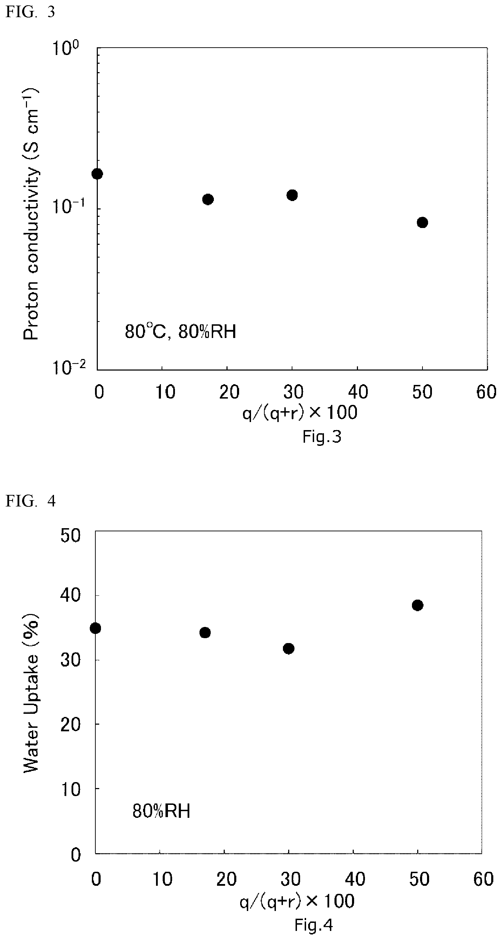

The proton conductivity was measured by AC impedance method under the conditions of 80°C and 80%RH (relative humidity) using an electrolyte membrane evaluation device manufactured by BEL Japan, Inc. The results are shown in FIG. 3.

### <Water uptake>

The water uptake was measured by a magnetic levitation balance under the conditions of 80°C and 80%RH (relative humidity) using an electrolyte membrane evaluation device manufactured by BEL Japan, Inc. The results are shown in FIG. 4.

As described above, it is found that the cation exchange resins obtained in the Examples have improved gas permeability compared to the cation exchange resin obtained in the Comparative Example (in particular, the oxygen gas permeability is improved compared to Nafion 212 (trade name)), and has excellent electrical property (cation conductivity) and chemical properties (gas permeability and water uptake property).

This specification discloses at least the following inventions.
[1] A cation exchange resin, comprising:
   a divalent hydrophobic group (a) comprising a bisphenol residue represented by the above formula (1);
   a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
   a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to a cation exchange group-containing group;
   wherein the cation exchange resin comprises:
      a hydrophobic unit (a) being composed of the hydrophobic group (a) alone, or being composed of a plurality of the hydrophobic groups (a) repeated via ether bond, thioether bond, or carbon-carbon bond;
      a hydrophobic unit (b) being composed of the hydrophobic group (b) alone, or being composed of a plurality of the hydrophobic groups (b) repeated via ether bond, thioether bond, or carbon-carbon bond; and
      a hydrophilic unit being composed of the hydrophilic group alone, or being composed of a plurality of the hydrophilic groups repeated via carbon-carbon bond; and
      wherein the hydrophobic unit (a), the hydrophobic unit (b), and the hydrophilic unit are bonded via ether bond, thioether bond, or carbon-carbon bond.
[2] The cation exchange resin according to [1],
   wherein the hydrophobic group (a) comprises a bisphenol residue represented by the above formula (1').
[3] The cation exchange resin according to [1] or [2],
   wherein the hydrophobic group (b) comprises a bisphenol residue represented by the above formula (2).
[4] The cation exchange resin according to [3],
   wherein the hydrophobic group (b) comprises a bisphenol residue represented by the above formula (2').
[5] The cation exchange resin according to [1] or [2],
   wherein the hydrophobic group (b) comprises a bisphenol residue represented by the above formula (3).
[6] The cation exchange resin according to [5],
   wherein the hydrophobic group (b) comprises a bisphenol residue represented by the above formula (3').
[7] The cation exchange resin according to any one of [1] to [6],
   wherein the hydrophilic group comprises a bisphenol residue represented by the above formula (4).
[8] The cation exchange resin according to any one of [1] to [6],
   wherein the hydrophilic group is an o-, m-, or p-phenylene residue represented by the above formula (5).
[9] The cation exchange resin according to any one of [1] to [8],
   wherein the percentage of the number of the hydrophobic group (a) to the sum of the number of the hydrophobic group (a) and the number of the hydrophobic group (b) is 5 to 65.
[10] A cation exchange membrane, comprising a cation exchange resin according to any one of [1] to [9].
[11] An electrolyte membrane, comprising a cation exchange resin according to any one of [1] to [9].
[12] A binder for forming an electrode catalyst layer, comprising a cation exchange resin according to any one of [1] to [9].
[13] A battery electrode catalyst layer, comprising a binder for forming an electrode catalyst layer according to [12].

## Claims

1. A cation exchange resin, comprising:
a divalent hydrophobic group (a) comprising a bisphenol residue represented by following formula (1);
a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to a cation exchange group-containing group;
wherein the cation exchange resin comprises:
a hydrophobic unit (a) being composed of the hydrophobic group (a) alone, or being composed of a plurality of the hydrophobic groups (a) repeated via ether bond, thioether bond, or carbon-carbon bond;
a hydrophobic unit (b) being composed of the hydrophobic group (b) alone, or being composed of a plurality of the hydrophobic groups (b) repeated via ether bond, thioether bond, or carbon-carbon bond; and
a hydrophilic unit being composed of the hydrophilic group alone, or being composed of a plurality of the hydrophilic groups repeated via carbon-carbon bond; and
wherein the hydrophobic unit (a), the hydrophobic unit (b), and the hydrophilic unit are bonded via ether bond, thioether bond, or carbon-carbon bond. 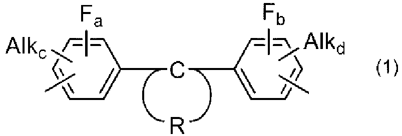
(In the formula, Alk are same or different from each other and represent an alkyl group or an aryl group; R represents a divalent hydrocarbon group forming an alicyclic structure; and a, b, c, and d are same or different from each other and represent an integer of 0 to 4.)

2. The cation exchange resin according to claim 1,
wherein the hydrophobic group (a) comprises a bisphenol residue represented by following formula (1'). 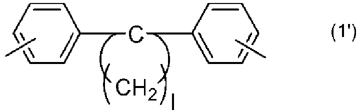 (In the formula, l represents an integer of 2 or more.)

3. The cation exchange resin according to claim 1,
wherein the hydrophobic group (b) comprises a bisphenol residue represented by following formula (2). 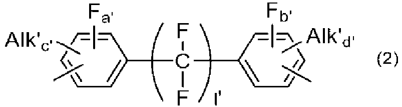 (In the formula, Alk' are same or different from each other and represent an alkyl group or an aryl group; a', b', c', and d' are same or different from each other and represent an integer of 0 to 4; and l' represents an integer of 1 or more.)

4. The cation exchange resin according to claim 3,
wherein the hydrophobic group (b) comprises a bisphenol residue represented by following formula (2'). 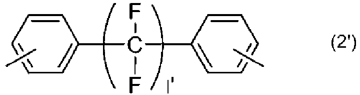 (In the formula, l' represents an integer of 1 or more.)

5. The cation exchange resin according to claim 1,
wherein the hydrophobic group (b) comprises a bisphenol residue represented by following formula (3). 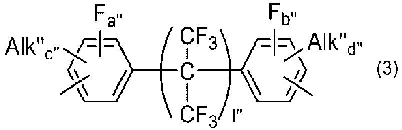 (In the formula, Alk" are same or different from each other and represent an alkyl group or an aryl group; a", b", c", and d" are same or different from each other and represent an integer of 0 to 4; and l" represents an integer of 1 or more.)

6. The cation exchange resin according to claim 5,
wherein the hydrophobic group (b) comprises a bisphenol residue represented by following formula (3'). 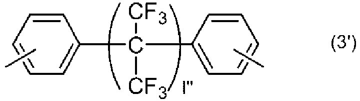 (In the formula, l" represents an integer of 1 or more.)

7. The cation exchange resin according to claim 1,
wherein the hydrophilic group comprises a bisphenol residue represented by following formula (4). 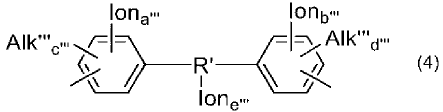 (In the formula, Alk‴ are same or different from each other and represent an alkyl group or an aryl group; Ion are same or different from each other and represent a cation exchange group-containing group; R' represents a hydrocarbon group, a silicon-containing group, a nitrogen-containing group, a phosphorus-containing group, an oxygen-containing group, a sulfur-containing group, or carbon-carbon bond, which may be substituted with the cation exchange group-containing group; c‴ and d‴ are same or different from each other and represent an integer of 0 to 4; and a"', b"', and e‴ are same or different from each other and represent an integer of 0 to 4, and at least one of a"', b"', and e‴ represent 1 or more.)

8. The cation exchange resin according to claim 1,
wherein the hydrophilic group is an o-, m-, or p-phenylene residue represented by following formula (5). 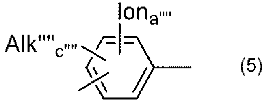 (In the formula, Alkʺʺ represents an alkyl or aryl group; Ion represents a cation exchange group-containing group; cʺʺ represents an integer of 0 to 4; and aʺʺ represents an integer of 1 to 4.)

9. The cation exchange resin according to claim 1,
wherein the percentage of the number of the hydrophobic group (a) to the sum of the number of the hydrophobic group (a) and the number of the hydrophobic group (b) is 5 to 65.

10. A cation exchange membrane, comprising a cation exchange resin according to any one of claims 1 to 9.

11. An electrolyte membrane, comprising a cation exchange resin according to any one of claims 1 to 9.

12. A binder for forming an electrode catalyst layer, comprising a cation exchange resin according to any one of claims 1 to 9.

13. A battery electrode catalyst layer, comprising a binder for forming an electrode catalyst layer according to claim 12.
